# EUROPEAN PATENT SPECIFICATION

(11) **EP 2 156 997 B1**
(45) Date of publication and mention of the grant of the patent: **13.12.2017**
(21) Application number: 08162620.2
(22) Date of filing: 19.08.2008
(51) Int. Cl.: B60R 21/34, B60R 19/20

(54) **A VEHICLE SAFETY SYSTEM**
FAHRZEUGSICHERHEITSSYSTEM
SYSTÈME DE SÉCURITÉ DE VÉHICULE

(43) Date of publication of application: 24.02.2010
(73) Proprietor: Autoliv Development AB, 447 83 Vårgårda (SE)
(72) Inventor: Goertz, Christoph, 85244 Rohrmoos (DE); Mackensen, Jürgen, 85221 Dachau (DE); Meyer, Bernhard, 80993 München (DE)
(74) Representative: Beattie, Alex Thomas Stewart

(56) References cited:
- EP-A- 1 593 556
- WO-A-98/13231
- DE-A1- 2 053 103
- DE-A1- 19 860 823
- GB-A- 2 388 080
- US-A1- 2005 062 268
- US-A1- 2005 082 803
- US-A1- 2007 057 490

## Description

This invention relates to a vehicle safety system, and in particular concerns a system including an air-bag which is inflated outside the vehicle. Such safety systems can be used to mitigate of the impulse delivered to the vehicle in a high-speed impact (e.g. over 65km/h), protection during a low-speed impact (e.g. below 15km/h), pedestrian protection, to increase the compatibility of larger cars such as SUVs to small city cars (e.g. Smart cars or "no-licence" cars), or for other purposes.

In collisions between motor vehicles and pedestrians, it is relatively common for the vehicle to strike the pedestrian head-on. This often leads to injury to the legs of the pedestrian, as the pedestrian's legs are hit by the vehicle's front bumper.

To address this, it has previously been proposed to include an air-bag which inflates forwardly of the vehicle prior to the impact. The pedestrian's legs are therefore contacted by this air-bag, rather than the vehicle's bumper, and this reduces the likelihood, or severity, of injury to the pedestrian's legs.

In typical systems of this type, the air-bag is stowed within the vehicle's front bumper. However, current regulations in many countries require that the front bumper of a vehicle is provided with a typical thickness of 65mm of foam within the bumper. Prior to inflation, folded air-bag cushions are tightly packed, and it has been found that providing a folded air-bag cushion within a bumper results in a bumper that is too hard to meet these regulations.

DE 2053103 discloses a procedure and device for reducing the severity of "rear-end" collisions in vehicles, comprising an air-bag deployed through an aperture in a vehicle bumper. The object of the invention is to provide an air-bag outside a vehicle to reduce the effect of a vehicle to vehicle impact.

It is an object of the present invention to seek to ameliorate some or all of the above difficulties. Accordingly, one aspect of the present invention provides an air-bag system for a vehicle, comprising: an air-bag which, prior to inflation, is in an initial position, wherein upon activation of the air-bag system, the air-bag is transported to an inflation position by a flexible gas delivery hose which is connected between two inflators, so that each inflator may deliver gas into one end of the hose, or is connected to an inflator at one end of the hose, while the other end of the hose is sealed and attached to another component, the transporting occurring while the air-bag is still substantially un-inflated, and wherein the air-bag is fully inflated after being transported to the inflation position, wherein the hose has a length when inflated which is greater than the distance between the two inflators, or between the inflator and the other component, so that, during inflation of the hose, the hose is driven into a substantially arcuate configuration, and wherein the air-bag is inflated outside the vehicle..

Advantageously, the hose has at least one selective gas delivery region which is in communication with an interior of the air-bag.

Preferably, the selective gas delivery region initially substantially prevents gas from flowing from the hose into the interior of the air-bag, and when the gas pressure within the hose exceeds a predetermined threshold, the selective gas delivery region allows gas to flow from the hose into the interior of the air-bag.

Advantageously, the flexible hose is in a folded configuration prior to the delivery of gas thereto by the inflator.

Preferably, the hose is initially uninflated, and the gas pressure in the hose does not exceed the predetermined threshold until the hose is at least substantially inflated.

Preferably, the hose is initially provided between the air-bag and a rigid member, and wherein during transportation of the air-bag to from the initial position to the inflation position, the air-bag is moved away from the rigid member.

Advantageously, the selective gas delivery region is formed by the presence of the air-bag adjacent an aperture in the hose.

Preferably, the selective gas delivery region comprises one or more perforations provided in the surface of the hose, which are configured to widen when the gas pressure within the hose exceeds the predetermined threshold.

Conveniently, the hose is formed from a flexible, elastic material.

Advantageously, the hose passes through an interior of the air-bag.

Preferably, the air-bag is provided with a throat to allow its connection to the hose to be sealed when the hose inflates.

Another aspect of the present invention provides a vehicle comprising an air-bag system according to the above.

Conveniently, the vehicle further comprises an obstruction provided between the initial position of the air-bag and an exterior surface of the vehicle, such that the obstruction is knocked out of position by the transportation of the air-bag from its initial position to its inflation position.

Advantageously, the inflation position of the air-bag is substantially level with, or outboard of, an external surface of the vehicle.

Preferably, the obstruction is a part of a bumper of the vehicle.

In order that the present invention may be more readily understood, embodiments thereof will now be described, by way of example, with reference to the accompanying drawings, in which:
Figures 1 and 3 are views of a front part of a motor vehicle including an air-bag system embodying the present invention;
Figure 2 is a view of the air-bag system of figure 1;
Figures 4a and 4b show a hose of the air-bag system of figure 1 prior to inflation and after inflation, respectively;
Figures 5 and 6 show the air-bag system of figure 1 in inflating position prior to inflation and after inflation, respectively;
Figures 7 and 8 show side and top views, respectively, of the front part of the motor vehicle of figure 1 after inflation of the air-bag system;
Figure 9 is an isometric view of the air-bag of the air-bag system after inflation;
Figures 10, 11 and 12 show stages in the production of the air-bag; and
Figures 13a, 13b and 13c show alternative ways of packing the hose of figures 4a and 4b prior to inflation.

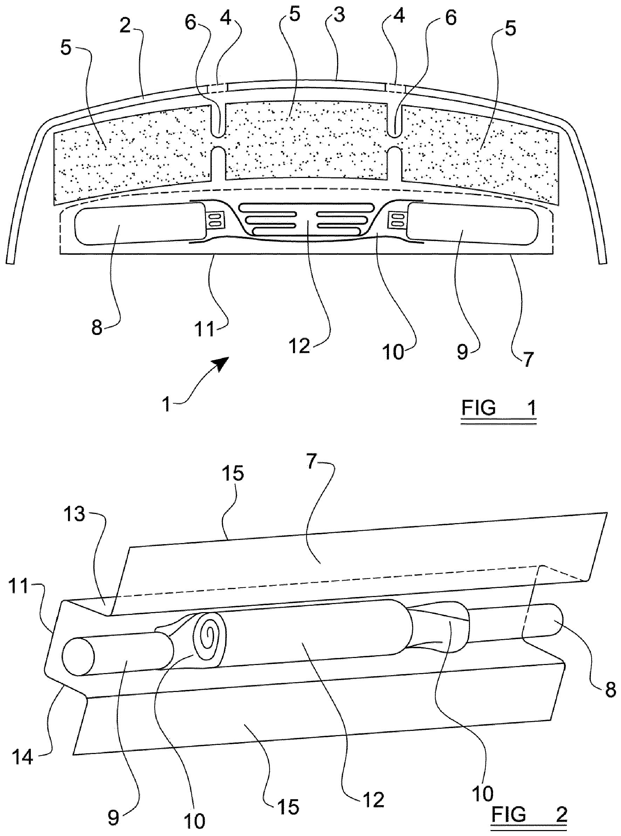

Referring firstly to figure 1, an air-bag module 1 embodying the present invention is shown, prior to deployment. Figure 1 shows a top-down view of the front portion of a motor vehicle, including the front bumper thereof. The front bumper has an outer skin 2, which may be formed from any suitably light, flexible materials such as plastic fibreglass, carbon fibre or other "composite" material, or thin, flexible metal. A central portion 3 of the outer skin 2 of the bumper is connected to the side portions of the outer skin 2 by relatively weak, frangible connections 4. In preferred embodiments, the central portion 3 supports the number plate of the vehicle.

Immediately behind the outer skin 2 lie three blocks 5 of foam. The foam is preferably soft and readily compressible, to afford cushioning so that the outer skin 2 of the bumper may deflect and deform inwardly. As discussed above, in many countries there are strict regulations as to the minimum thickness of this foam, and/or the extent to which the bumper is compressible.

The foam positioned behind the outer skin 2 of the bumper comprises three blocks 5, and includes two side blocks 5, and a central block 5, which is positioned substantially behind the central portion 3 of the outer skin 2. The central block 5 is connected to the two side blocks 5 by relatively weak frangible connections 6.

Located behind the blocks 5 of foam is a beam 7, which comprises a substantially trough-shaped channel with enclosing rear, upper and lower surfaces 11,13,14, but which is open in a forward-facing direction. The beam 7 extends across the vehicle, and is preferably substantially as wide as the forward-facing part of the bumper.

Located within the beam 7 are first and second inflators 8,9, which are located at left and right sides of the beam 7. Each of the inflators 7,8 is operable to generate relatively large quantities of gas, and may comprise pyrotechnic or pneumatic inflators, as is known in the art.

A gas delivery hose 10 is connected to both of the inflators 8,9 such that gas from the inflators may be delivered to an interior of the hose 10. The hose 10 is connected between the inflators 8,9, so that each inflator 8,9 may deliver gas into one end of the hose 10. The hose 10 is formed from a material that is flexible, and even more preferably is elastic. The hose 10 may be formed from a suitable fabric.

Before the air-bag unit 1 is activated, the hose 10 is uninflated, and is packed towards the rear surface 11 of the beam 7. The length of the hose 10 is, in this embodiment, greater than the distance between the two inflators 8,9.

Also provided within, or substantially within, the beam 7 is an air-bag 12. Before the air-bag unit 1 is activated, the air-bag 12 is packed, rolled and/or folded, and is connected to the hose 10, as will be discussed in greater detail below. The air-bag 12 is positioned to lie behind the central block 5 of foam. Turning to figure 2, a front view of the beam 7, including the inflators 8,9, the hose 10 and the air-bag 12, is shown. As discussed above, the beam 7 has a rear surface 11, and upper and lower surfaces 13,14, which define the trough-shape thereof. The beam 7 also includes upwardly-and downwardly-extending flanges 15, to allow the beam to be supported by, and connected to other components of the vehicle (not shown).

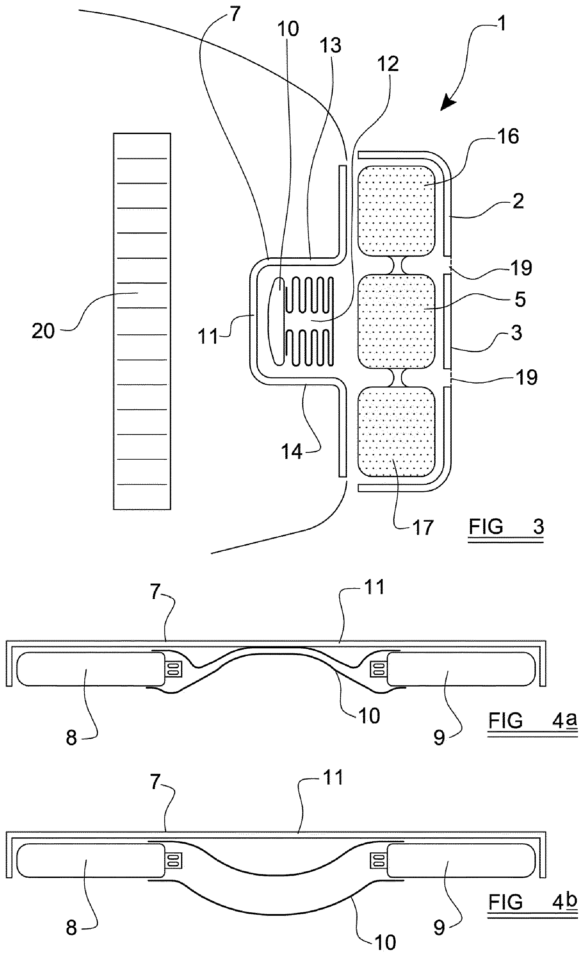

Turning to figure 3, a side view of the air-bag system 1 prior to deployment is shown. From this view, it can be seen that, within the outer skin 2 of the bumper, three strips of foam are provided. The three inter-connected blocks 5 of foam discussed above are provided across a central region of the bumper, and together comprise a central strip of foam. Above and below these blocks 5, further upper and lower strips 16,17 are provided. These upper and lower strips 16,17 of foam extend substantially all the way across the bumper, and are not divided into blocks 5, as is the case with the middle foam strip. The upper and lower strips 16,17 of foam are connected to the central blocks 5 of foam by relatively weak frangible connections 18. Weak connections 19 are also provided around the central portion 3 of the outer skin 2 of the bumper when viewed in this direction. It will therefore be understood that the central region 3 is substantially rectangular, and surrounded on all four sides by weak connections 4, 19.

In figure 3, a cooling system 20 of the vehicle is also visible, located rearwardly of the beam.

Deployment of the air-bag unit 1 will now be described. Ideally, the air-bag unit 1 will be deployed before the vehicle makes contact with another object. The vehicle is therefore preferably equipped with one or more sensors, such as optical or infrared frequency cameras or radar systems, that will allow an on-board processor to determine that an impact with an object ahead of the vehicle is likely or unavoidable. The vehicle's sensor systems may also make determinations as to the type of object that is ahead of the vehicle, for instance by making measurements as to the apparent size of the object, and may also match the shape of the object against a number of "template" shapes held in a memory. The likely severity of the crash may also be gauged, for instance with reference to the speed of the vehicle relative to the road, and/or to the relative speed between the vehicle and the other object.

It is anticipated that triggering of the air-bag unit 1 would be of most use in relatively low-speed impacts. If the vehicle's processor determines that a suitable impact is or about to occur, or is likely to occur, the air-bag unit 1 will be triggered.

When a triggering signal is sent to the air-bag unit 1 by an on-board processor, the inflators 8,9 start to generate gas rapidly, and to introduce this gas into an interior of the hose 10.

As discussed above, the length of the hose 10 is greater than the distance between the inflators 8,9. Before activation of the air-bag unit 1, the hose 10 is preferably folded against the rear surface 11 of the beam 7 as shown in figure 4a. When gas is introduced into the hose 10 under high pressure from the inflators 8,9, the hose 10 increases in rigidity and can no longer remain in this folded configuration, and is driven into an arcuate shape extending between the inflators 8,9. Since movement of the hose 10 is blocked in rearward, upward and downward functions by the rear, top and bottom surfaces 11,13,14 of the beam 7, the hose 10 is formed into an arcuate configuration extending forwardly out of the open surface of the beam 7, as shown in figure 4b.

The air-bag 12 is omitted from figures 4a and 4b for the purposes of clarity. However, as discussed above, the air-bag 12 is attached to the hose 10, and extends forwardly therefrom.

When the hose 10 is formed into a forwardly-extending arcuate shape, the air-bag 12, which is still uninflated, is driven into contact with a rear surface of the central block 5 of foam. The air-bag 12 is driven into this block 5 of foam with sufficient force to break the weak connections 6,18 between this block 5 and the blocks 5 to the left and right thereof, and also to the upper and lower strips 16,17 of foam. The middle block 5 of foam is therefore driven forwardly until the block 5 comes into contact with the rear surface of the central portion 3 of the outer skin 2 of the bumper. Once again, this contact is made with sufficient force to break the weak connections 4,19 which connect the central region 3 to the remainder of the outer skin 2 of the bumper. The air-bag 12 continues to be driven forward by the inflation of the hose 10, so that the middle block 5 of foam, and the central portion 3 of the outer skin 2 of the bumper, are thrown forwardly of the vehicle. For safety reasons the central portion of the bumper is captured by a tether system as known in the art for covering of passenger airbags.

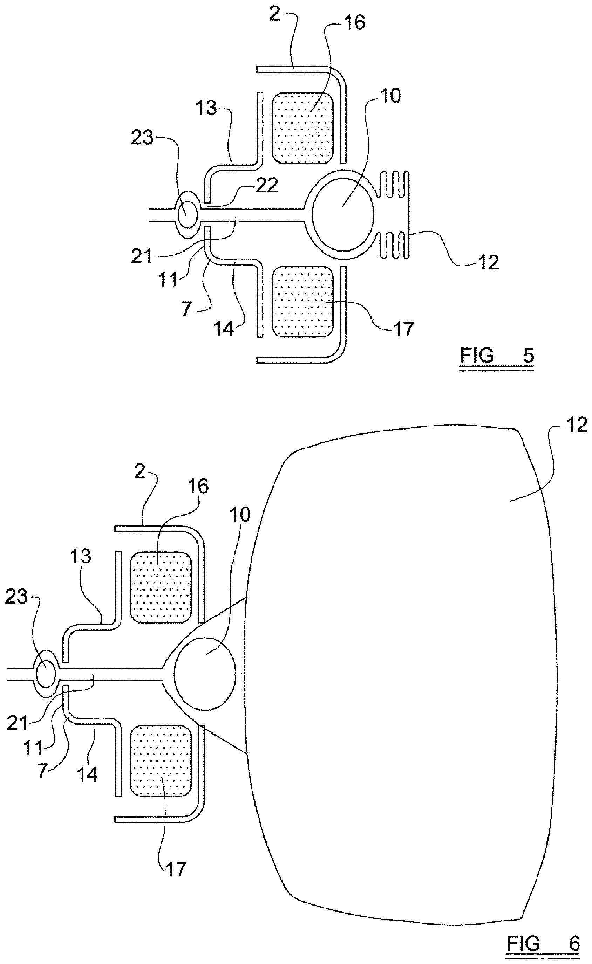

When the hose 10 is fully inflated, the middle section 10 of the hose, which extends furthest forward, preferably lies substantially level with, or protrudes beyond, the outer skin 2 of the bumper, as shown in figure 5. At this stage, the air-bag 12 is still wholly or substantially uninflated, but is positioned approximately level with, or forwardly of the outer skin 2 of the bumper. The hose 10 and air-bag 12 are preferably prevented from moving too far forwardly, however, by a restraining mechanism such as a tether 21, which is attached to a rear portion of the air-bag 12. The tether 21 passes through an aperture 22 provided in the rear surface 11 of the beam 7, and is attached to a sturdy ring 23 or other widened portion, which is provided behind the rear surface 11 and is too wide to pass through the aperture 22.

Once the air-bag 12 is in the position shown in figure 5, full inflation of the air-bag may begin, until the air-bag 12 is fully inflated, as shown in figure 6. In preferred embodiments of the invention, the capacity of the air-bag 12 is around 80 litres.

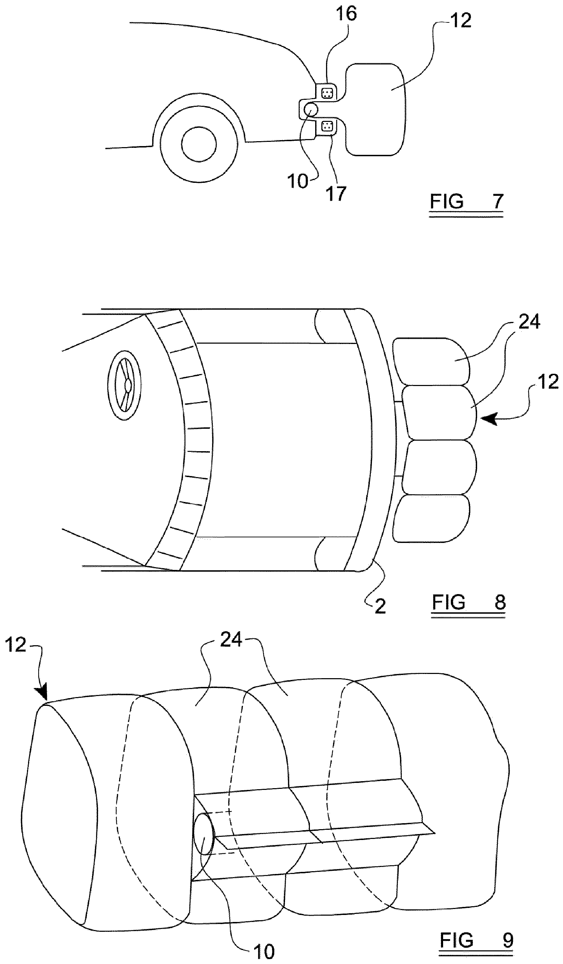

A side-view of the air-bag 12 in its inflated state is shown in figure 7. A top view of the inflated air-bag 12 is shown in figure 8. As can be seen in this figure, although the air-bag 12 protrudes from the central portion 3 of the outer skin 2 of the bumper, when inflated the air-bag 12 extends to both sides, thus covering the front of substantially all of the bumper. In the depicted embodiment, the air-bag 12 comprises four interconnected chambers 24, which are arranged side-by-side.

An isometric rear view of the inflated air-bag 12 is shown in figure 9.

The construction of the air-bag 12, and its connection to the hose 10, will now be described in more detail.

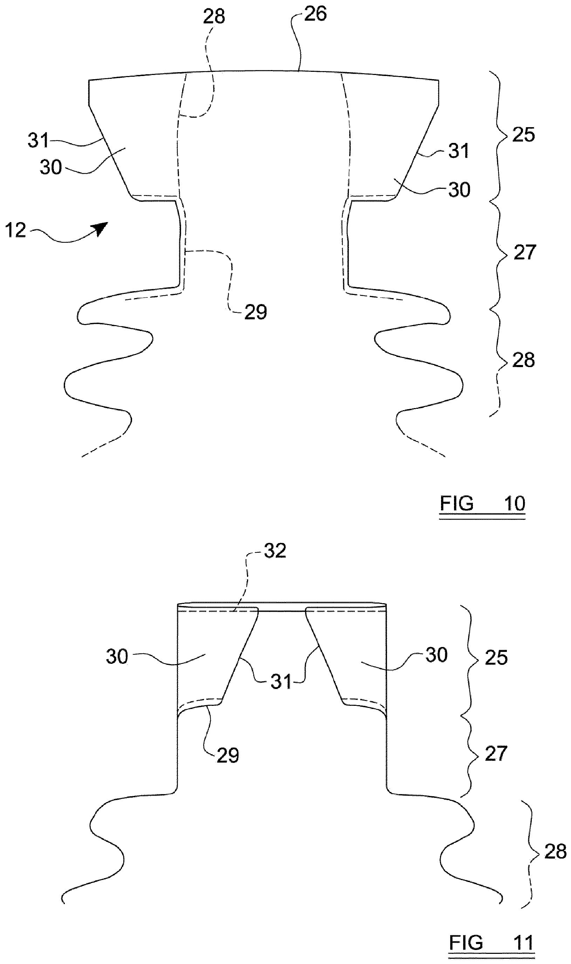

With reference to figure 10, a top view is shown of the air-bag 12 in a partially completed state. A connection region 25 of the air-bag 12 comprises upper and lower panels which overlay one another, and are connected to each other along a top edge 26 thereof. The top edge 26 may comprise a fold in a continuous sheet of material, or may comprise a join line between the upper and lower panels.

As each of the panels extends away from the top edge 26, the width of the panel reduces in a tapering fashion, and then reduces sharply until the overall width of the panels is around half of the width at the top edge 26. The panels then continue away from the top edge 6, having substantially constant width, forming a delivery portion 27 of the air-bag 12.

At the far end of the delivery portion 27 from the top edge 26, an inflation portion 28 of the air-bag 12 is formed. The inflation portion 28 is substantially wider than the delivery portion 27 is substantially enclosed, and is the main part of the air-bag 12 that provides protection to pedestrians. As described above, the inflation portion 28 of the air-bag 12 may be formed to have a plurality of chambers 24. This is the portion that, prior to inflation of the air-bag 12, will be tightly packed, rolled and/or folded.

First stitching 29 is formed at the edges of the upper and lower panels in the region of the delivery portion 27, to seal the edges of the upper and lower panels to one another. In the connection portion 25, however, the outer edges of the upper and lower panels are not connected to one another. At the sides of the air-bag 12 in the delivery portion 25 thereof, therefore, two outwardly protruding, generally triangular-shaped entry portions 30 are formed, with sideways-facing openings 31.

Referring to figure 11, in the next stage of the construction of the air-bag 12, the entrance portions 30 are folded into the interior of the air-bag 12, and this can be likened to pushing the sleeves of a T-shirt inwardly into the body of the T-shirt. Second stitching 32 is then formed across the top edge 26, this stitching passing through all four layers of the upper and lower panels, and the upper and lower surfaces of the entrance portions 30. The entrance portions 30 are thus held firmly in place within the body of the air-bag 12, so that a pair of throats are formed allowing access to the interior of the air-bag 12.

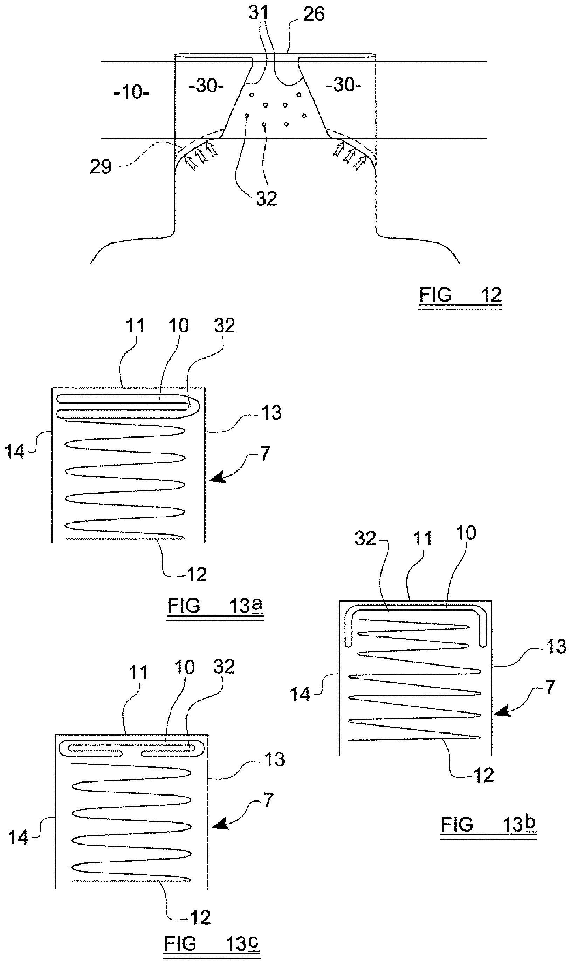

Referring to figure 12, the hose 10 is then passed through the air-bag 12, through the throats formed by the openings 31 in the inverted entrance portions 30. The ends of the hose 10 are then connected to the inflators 8,9.

A selective gas delivery region is formed in the surface of the hose 10. Preferably, the region is in the form of a plurality of delivery perforations 32 and is located such that when the hose 10 is inserted into the air-bag 12 as described above, the delivery perforations 32 are in fluid communication with the interior region of the air-bag 12. The delivery perforations 32 are formed to be relatively small so that, when gas below a threshold pressure is introduced into the hose 10, the perforations 32 allow very little gas to escape therethrough. Weakened regions are formed around the delivery perforations 32, however, so that when the gas pressure within the hose 10 rises above the threshold, the perforations 32 are widened considerably, allowing the delivery of large amounts of gas through the perforations 32.

In yet further embodiments, no perforations are formed in the hose, but weakened regions are formed that will rupture to form perforations or apertures when gas pressure within the hose 10 exceeds the threshold.

In an alternative embodiment, one or more lines of perforations may define the outline of a larger gas flow aperture formed in the hose 10. When the hose 10 has been inflated, the pressure in the hose 10 may cause the perforations to burst, leading to the formation of one or more larger gas flow apertures through which gas may exit the hose 10.

In another alternative embodiment the aperture to inflate the air-bag 12 is simply covered and closed by the folded air-bag 12. At ignition, the filling of the air-bag 12 is blocked by the presence of the folded air-bag 12, particularly since, due to its inertia, the air-bag 12 will be pressed against the aperture as the central portion of the hose 10 moves forwardly. As the hose 10 reaches the inflation position, the gas pressure in the hose 10 will air-bag 12 will act against the air-bag 12, moving the air-bag 12 away from the aperture and thus opening the aperture and allowing gas to flow from the hose 10 into the air-bag 12.

The hose 10 and inflators 8, 9 are then installed in the beam 7 as described above, so that the expansion portion 28 of the air-bag 12 is located on the forward-facing side of the hose 10.

When the air-bag unit 1 is triggered and the hose 10 inflates, forming into an arcuate shape and pushing the air-bag 12 forwardly, the gas pressure within the hose 10 will not be sufficient to widen the delivery perforations 32. Only when the hose 10 has reached its fully inflated state, with the air-bag 12 in the appropriate position to begin full inflation, will the gas pressure inside the hose 10 exceed the threshold, widening the delivery perforations 32 and allowing gas to flow from the inflators 8,9, through the hose 10 and into the interior of the air-bag 12 at a high rate. The gas will then flow through the delivery portion 27 and into the inflation portion 28 to inflate the inflation portion 28.

The throats defined by the two entrance portions 30 are preferably of roughly the same width as, or slightly smaller than, the width of the hose 10 when fully inflated. Hence, when the hose 10 inflates, the hose 10 presses against the inside surfaces of the throats, allowing a firm and substantially air-tight connection to be made between the hose 10 and the air-bag 12.

Figures 13a, 13b and 13c show alternative ways in which the hose 10 may be folded within the beam 7, against the rear surface 11 thereof. Figure 13a shows the hose 10 folded longitudinally in half, with the delivery perforations 32 being provided around the fold on the inner side thereof.

Figure 13b shows the hose 10 packed with two substantially right-angled folds formed between the ends of the hose and the portion containing the delivery perforations 32, with this portion lying close to the rear surface 11 of the beam.

Figure 13c once again shows the portion of the hose 10 that includes the delivery perforations 32 resting against the rear surface 11 of the beam 7, with top and bottom regions of the hose 10 being folded through 180° and overlying this portion.

A skilled person will understand that there are many other ways in which the hose 10 may be packed in the beam 7 prior to activation of the air-bag system.

As described above, the inflators 8,9 may be pyrotechnic inflators. However, the inflators 8,9 may alternatively be pneumatic inflators and this may be particularly useful if the air-bag module 1 is to be reversible, i.e. after deployment, the air-bag module 1 can one again be placed in a ready state.

It is also envisaged that only one inflator may be used, although in preferred embodiments two inflators are provided. Further inflators may also be provided, if necessary.

It is preferred that the hose 10 is substantially fixed in position at either end thereof, with the air-bag 12 being positioned on an intermediate portion of the hose 10. In the embodiment described above, the hose 10 is fixed at its ends to the inflators 8,9. However, if only one inflator is provided, this may be attached to one end of the hose 10, while the other end of the hose 10 is sealed and attached to another component, for instance an inner surface of the beam 7.

While the above description includes an air-bag which is mounted behind the front bumper of a motor vehicle, air-bag modules of this type may be provided in other parts of a vehicle. For instance, an air-bag module of this type may be provided behind, or in the region of, a rear bumper of a vehicle, in case a rearward collision is anticipated, or on an A pillar of a vehicle, to prevent a pedestrian striking the A pillar during an accident.

It is envisaged that the air-bag 12 will be vented by fabric permeability, and in these embodiments no vent holes may be provided. However, in alternative embodiments, vent holes may be provided in the air-bag 12, to allow for venting of the air-bag 12 once it has been inflated.

It will be appreciate that the present invention provides an air-bag module that will allow the safety of pedestrians to be effectively increased, whilst reducing interference with the construction of vehicle bumpers and other components.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An air-bag system (1) for a vehicle, comprising an air-bag (12) which, prior to inflation, is in an initial position, wherein upon activation of the air-bag system (1), the air-bag (12) is transported to an inflation position by a flexible gas delivery hose (10) which is connected between two inflators (8, 9), so that each inflator (8, 9) may deliver gas into one end of the hose (10), or is connected to an inflator at one end of the hose (10), while the other end of the hose (10) is sealed and attached to another component, the transporting occurring while the air-bag (12) is still substantially un-inflated, and wherein the air-bag (12) is fully inflated after being transported to the inflation position, wherein the hose (10) has a length when inflated which is greater than the distance between the two inflators (8, 9), or between the inflator and the other component, so that, during inflation of the hose (10), the hose (10) is driven into a substantially arcuate configuration, and wherein the air-bag is inflated outside the vehicle.

2. An air-bag system (1) according to claim 1, wherein the hose (10) has at least one selective gas delivery region (32) which is in communication with an interior of the air-bag (12).

3. An air-bag system (1) according to claim 2 wherein the selective gas delivery region (32) initially substantially prevents gas from flowing from the hose (10) into the interior of the air-bag (12), and when the gas pressure within the hose (10) exceeds a predetermined threshold, the selective gas delivery region (32) allows gas to flow from the hose (10) into the interior of the air-bag (12).

4. An air-bag system (1) according to claims 2 or 3, wherein the flexible hose (10) is in a folded configuration prior to the delivery of gas thereto by the inflator (8, 9).

5. An air-bag system (1) according to any one of claims 2-4, wherein the hose (10) is initially un-inflated, and the gas pressure in the hose (10) does not exceed the predetermined threshold until the hose (10) is at least substantially inflated.

6. An air-bag system (1) according to any one of claims 2-5, wherein the hose (10) is initially provided between the air-bag (12) and a rigid member (7), and wherein during transportation of the air-bag (12) to from the initial position to the inflation position, the air-bag (12) is moved away from the rigid member (7).

7. An air-bag system (1) according to any one of claims 2-6, wherein the selective gas delivery region (32) is formed by the presence of the air-bag (12) adjacent an aperture in the hose (10).

8. An air-bag system (1) according to any one of claims 2-7, wherein the selective gas delivery region (32) comprises one or more perforations provided in the surface of the hose (10), which are configured to widen when the gas pressure within the hose (10) exceeds the predetermined threshold.

9. An air-bag system (1) according to any one of claims 2-8, wherein the hose (10) is formed from a flexible, elastic material.

10. An air-bag system (1) according to any one of claims 2-8, wherein the hose (10) passes through an interior of the air-bag (12).

11. An air-bag system (1) according to claim 10, wherein the air-bag (12) is provided with a throat (31) to allow its connection to the hose (10) to be sealed when the hose (10) inflates.

12. A vehicle comprising an air-bag system (1) according to any preceding claim.

13. A vehicle according to claim 12, further comprising an obstruction provided between the initial position of the air-bag (12) and an exterior surface of the vehicle (2), such that the obstruction is knocked out of position by the transportation of the air-bag (12) from its initial position to its inflation position.

14. A vehicle according to claim 13, wherein the inflation position of the air-bag (12) is substantially level with, or outboard of, an external surface of the vehicle (2).

15. A vehicle according to claim 13 or 14, wherein the obstruction is a part of a bumper of the vehicle (2)

## Patentansprüche

1. Airbagsystem (1) für ein Fahrzeug, das einen Airbag (12) umfasst, der sich vor dem Aufblasen in einer Ausgangsposition befindet, wobei der Airbag (12) bei der Aktivierung des Airbagsystems (1) durch einen flexiblen Gaszufuhrschlauch (10) zu einer Aufblaseposition transportiert wird, der zwischen zwei Gasgeneratoren (8, 9) angeschlossen ist, damit jeder Gasgenerator (8, 9) Gas in ein Ende des Schlauchs (10) einleiten kann, oder der an einem Ende des Schlauchs (10) mit einem Gasgenerator verbunden ist, während das andere Ende des Schlauchs (10) verschlossen und an einem anderen Bauteil angebracht ist, wobei der Transport erfolgt, während der Airbag (12) noch im Wesentlichen nicht aufgeblasen ist, und wobei der Airbag (12) vollständig aufgeblasen wird, nachdem er zu der Aufblaseposition transportiert wurde, wobei der Schlauch (10) aufgeblasen eine Länge aufweist, die größer ist als der Abstand zwischen den beiden Gasgeneratoren (8, 9) oder zwischen dem Gasgenerator und dem anderen Bauteil, sodass der Schlauch (10) während des Aufblasens des Schlauchs (10) in eine im Wesentlichen bogenförmige Gestaltung gebracht wird, und wobei der Airbag außerhalb des Fahrzeugs aufgeblasen wird.

2. Airbagsystem (1) nach Anspruch 1, wobei der Schlauch (10) mindestens einen Bereich (32) für eine gezielte Gaszufuhr aufweist, der mit einem Innenraum des Airbags (12) in Verbindung steht.

3. Airbagsystem (1) nach Anspruch 2, wobei der Bereich (32) für eine gezielte Gaszufuhr anfangs im Wesentlichen verhindert, dass Gas aus dem Schlauch (10) in den Innenraum des Airbags (12) strömt, und wenn der Gasdruck in dem Schlauch (10) einen vorgegebenen Schwellenwert übersteigt, der Bereich (32) für eine gezielte Gaszufuhr Gas aus dem Schlauch (10) in den Innenraum des Airbags (12) strömen lässt.

4. Airbagsystem (1) nach Anspruch 2 oder 3, wobei sich der flexible Schlauch (10) vor der Gaszufuhr zu ihm durch den Gasgenerator (8, 9) in einer zusammengelegten Anordnung befindet.

5. Airbagsystem (1) nach einem der Ansprüche 2 bis 4, wobei der Schlauch (10) anfangs nicht aufgeblasen ist und der Gasdruck im Schlauch (10) den vorgegebenen Schwellenwert nicht übersteigt, bevor der Schlauch (10) nicht zumindest im Wesentlichen aufgeblasen ist.

6. Airbagsystem (1) nach einem der Ansprüche 2 bis 5, wobei der Schlauch (10) anfangs zwischen dem Airbag (12) und einem starren Element (7) vorgesehen ist und wobei der Airbag (12) während des Transports des Airbags (12) von der Ausgangsposition zu der Aufblaseposition von dem starren Element (7) weg bewegt wird.

7. Airbagsystem (1) nach einem der Ansprüche 2 bis 6, wobei der Bereich (32) für eine gezielte Gaszufuhr durch das Vorhandensein des Airbags (12) angrenzend an eine Öffnung im Schlauch (10) ausgebildet ist.

8. Airbagsystem (1) nach einem der Ansprüche 2 bis 7, wobei der Bereich (32) für eine gezielte Gaszufuhr ein oder mehrere in der Oberfläche des Schlauchs (10) vorgesehene Löcher umfasst, die so ausgelegt sind, dass sie weiter werden, wenn der Gasdruck im Schlauch (10) den vorgegebenen Schwellenwert übersteigt.

9. Airbagsystem (1) nach einem der Ansprüche 2 bis 8, wobei der Schlauch (10) aus einem flexiblen, elastischen Material geformt ist.

10. Airbagsystem (1) nach einem der Ansprüche 2 bis 8, wobei der Schlauch (10) durch einen Innenraum des Airbags (12) verläuft.

11. Airbagsystem (1) nach Anspruch 10, wobei der Airbag (12) mit einer Verengung (31) versehen ist, durch die sein Anschluss an den Schlauch (10) dicht abgeschlossen werden kann, wenn der Schlauch (10) aufgeblasen wird.

12. Fahrzeug, das ein Airbagsystem (1) nach einem der vorhergehenden Ansprüche umfasst.

13. Fahrzeug nach Anspruch 12, das ferner ein Hindernis umfasst, das zwischen der Ausgangsposition des Airbags (12) und einer Außenfläche des Fahrzeugs (2) vorgesehen ist, sodass durch den Transport des Airbags (12) von seiner Ausgangsposition zu seiner Aufblaseposition das Hindernis weggestoßen wird.

14. Fahrzeug nach Anspruch 13, wobei sich die Aufblaseposition des Airbags (12) im Wesentlichen auf gleicher Höhe mit oder außerhalb einer Außenfläche des Fahrzeugs (2) befindet.

15. Fahrzeug nach Anspruch 13 oder 14, wobei das Hindernis ein Teil eines Stoßfängers des Fahrzeugs (2) ist.

## Revendications

1. Système de coussin de sécurité gonflable (1) pour un véhicule, comprenant un coussin de sécurité gonflable (12) qui, avant le gonflage, est dans une position initiale, dans lequel, lors de l'activation du système de coussin de sécurité gonflable (1), le coussin de sécurité gonflable (12) est déplacé dans une position de gonflage par un tuyau flexible d'alimentation en gaz (10) qui est raccordé entre deux gonfleurs (8, 9), de telle sorte que chaque gonfleur (8, 9) peut alimenter du gaz dans une extrémité du tuyau (10), ou qui est raccordé à un gonfleur par une extrémité du tuyau (10), tandis que l'autre extrémité du tuyau (10) est obturée et attachée à un autre composant, le déplacement étant effectué tandis que le coussin de sécurité gonflable (12) est toujours sensiblement non gonflé, et dans lequel le coussin de sécurité gonflable (12) est complètement gonflé après avoir été déplacé dans la position de gonflage, dans lequel le tuyau (10) présente une longueur quand il est gonflé qui est supérieure à la distance entre les deux gonfleurs (8, 9), ou entre le gonfleur et l'autre composant, de telle sorte que, pendant le gonflage du tuyau (10), le tuyau (10) est amené dans une configuration sensiblement courbée, et dans lequel le coussin de sécurité gonflable est gonflé hors du véhicule.

2. Système de coussin de sécurité gonflable (1) selon la revendication 1, dans lequel le tuyau (10) comporte au moins une zone d'alimentation sélective en gaz (32) qui est en liaison avec un intérieur du coussin de sécurité gonflable (12).

3. Système de coussin de sécurité gonflable (1) selon la revendication 2, dans lequel, initialement, la zone d'alimentation sélective en gaz (32) empêche sensiblement du gaz de s'écouler du tuyau (10) dans l'intérieur du coussin de sécurité gonflable (12), et quand la pression de gaz dans le tuyau (10) dépasse un seuil prédéfini, la zone d'alimentation sélective en gaz (32) permet à du gaz de s'écouler du tuyau (10) dans l'intérieur du coussin de sécurité gonflable (12).

4. Système de coussin de sécurité gonflable (1) selon la revendication 2 ou 3, dans lequel le tuyau flexible (10) est dans une configuration pliée avant l'alimentation en gaz dans celui-ci par le gonfleur (8, 9).

5. Système de coussin de sécurité gonflable (1) selon l'une quelconque des revendications 2 à 4, dans lequel le tuyau (10) est initialement non gonflé, et la pression de gaz dans le tuyau (10) ne dépasse pas le seuil prédéfini jusqu'à ce que le tuyau (10) soit au moins sensiblement gonflé.

6. Système de coussin de sécurité gonflable (1) selon l'une quelconque des revendications 2 à 5, dans lequel le tuyau (10) est initialement prévu entre le coussin de sécurité gonflable (12) et un élément rigide (7), et dans lequel, pendant le déplacement du coussin de sécurité gonflable (12) de la position initiale à la position de gonflage, le coussin de sécurité gonflable (12) est éloigné de l'élément rigide (7).

7. Système de coussin de sécurité gonflable (1) selon l'une quelconque des revendications 2 à 6, dans lequel la zone d'alimentation sélective en gaz (32) est formée par la présence du coussin de sécurité gonflable (12) adjacent à un orifice dans le tuyau (10).

8. Système de coussin de sécurité gonflable (1) selon l'une quelconque des revendications 2 à 7, dans lequel la zone d'alimentation sélective en gaz (32) comprend une ou plusieurs perforations prévues dans la surface du tuyau (10), qui sont configurées pour s'élargir quand la pression de gaz dans le tuyau (10) dépasse le seuil prédéfini.

9. Système de coussin de sécurité gonflable (1) selon l'une quelconque des revendications 2 à 8, dans lequel le tuyau (10) est formé à partir d'un matériau flexible élastique.

10. Système de coussin de sécurité gonflable (1) selon l'une quelconque des revendications 2 à 8, dans lequel le tuyau (10) passe à travers un intérieur du coussin de sécurité gonflable (12).

11. Système de coussin de sécurité gonflable (1) selon la revendication 10, dans lequel le coussin de sécurité gonflable (12) est pourvu d'un rétrécissement (31) pour permettre la fermeture hermétique de son raccordement au tuyau (10) quand le tuyau (10) se gonfle.

12. Véhicule comprenant un système de coussin de sécurité gonflable (1) selon une quelconque revendication précédente.

13. Véhicule selon la revendication 12, comprenant en outre un obstacle prévu entre la position initiale du coussin de sécurité gonflable (12) et une surface extérieure du véhicule (2), de telle sorte que l'obstacle est projeté hors de sa position par le déplacement du coussin de sécurité gonflable (12) de sa position initiale à sa position de gonflage.

14. Véhicule selon la revendication 13, dans lequel la position de gonflage du coussin de sécurité gonflable (12) est sensiblement de niveau avec, ou à l'extérieur d'une surface extérieure du véhicule (2).

15. Véhicule selon la revendication 13 ou 14, dans lequel l'obstacle est une partie d'un pare-chocs du véhicule (2).
